# EUROPEAN PATENT APPLICATION

(11) **EP 3 553 235 A1**
(43) Date of publication of application: **16.10.2019**
(21) Application number: 19162020.2
(22) Date of filing: 11.03.2019
(51) Int. Cl.: E03D 1/012, E03D 11/14, F16L 25/14

(54) **CONNECTION PIECE FOR A HANGING TOILET**

(30) Priority: 29.03.2018 BE 201805211
(71) Applicant: Vinck Kris BVBA, 9300 Aalst (BE)
(72) Inventor: VINCK, Kris, 9300 Aalst (BE); STERCK, Stijn, 9300 Aalst (BE)
(74) Representative: Van hunsel, Lieven M.S.

(57) **Abstract**

Connection piece (13) for a hanging toilet (1), characterised in that the connection piece temporarily connects the supply pipe (5) of the flush basin (4) to a hanging toilet (1) with the hanging toilet's (1) drain pipe (9) to the sewer system while the overhanging part (7) of the hanging toilet has not been installed yet. The connection piece (13) prevents the unwanted leaking of flush water on the floor and unwanted odour nuisance from the sewer system via the drain pipe of the hanging toilet, and it allows to check the proper functioning of the flush as well as the water tightness of the connections of the inlet of the water pipe and the outlet to the sewer system.

## Description

The present invention concerns a connection piece for a hanging toilet.

More specifically, the invention aims to temporarily replace the coupling between the flush basin and the drain of a hanging toilet while the overhanging part of the hanging toilet itself is not present yet.

It is known that hanging toilets are often preferred to standing toilets, because with hanging toilets the floor underneath the toilet remains free and can be cleaned better, and the toilet drain is not led through this underlying floor but through the wall on which the hanging toilet is suspended.

Traditionally, hanging toilets consist of a supportive framework that is attached to or in an upright wall, where the framework is fitted with a flush basin connected to a water supply pipe and with a push button enabling a user to operate the flush basin, and of an overhanging part of the hanging toilet to be attached to the framework.

The supporting framework is further equipped with a supply pipe from the flush basin to the hanging toilet that is closed with a watertight lid as long as the overhanging part has not been mounted.

The supporting framework is further provided with a drain pipe to which the overhanging part of the toilet must be connected, and it is closed with a watertight lid as long as the overhanging part has not been mounted.

The framework is further provided with two threaded rods, over which the overhanging part must be slid and attached to with wing nuts.

Problems arise when the supporting framework is installed and connected to a water supply pipe and connected to the drain pipe to the sewer, but the overhanging part of the hanging toilet has not been installed yet.

The flush basin will now fill up with water and, when pressing the push button, will send a flush of water to the overhanging part of the hanging toilet through the flush basin's supply pipe to the hanging toilet, where the watertight lid, if there is one, may come off or start leaking due to the sudden water pressure, as a result of which the flush water ends up on the floor.

On the other hand, the airtight lid on the drain pipe to the sewer system may be absent or insufficiently airtight, as a result of which the smell from the sewer system may penetrate the room with the hanging toilet.

The present invention aims to remedy the aforementioned problems, so that no unwanted flush water ends up on the floor and no unwanted odour nuisance may arise. The present invention also aims to check the proper functioning of the flush and the water tightness of the connections of the water pipe's inlet and of the drain to the sewer system.

To this end, the invention concerns a connection piece for a hanging toilet, where the connection piece connects the supply pipe of the flush basin to a hanging toilet with the hanging toilet's drain pipe to the sewer system.

An advantage of such a connection piece is that, when the overhanging part of the hanging toilet is not installed yet, the flush water cannot end up on the floor but will be drained through the drain pipe to the sewer system.

An additional advantage of such a connection piece is that the connection piece prevents odour nuisance that may spread from the sewer system via the drain pipe to the room of the hanging toilet.

Another advantage of such a connection piece is that it allows to check the proper functioning of the flush and the water tightness of the seals at the inlet of the water pipe and at the outlet to the sewer system.

Preferably, the connection piece has a fitting small diameter on the side to be connected to the supply pipe of the flush basin and a fitting larger diameter on the side that is connected to the drain pipe to the sewer system, so that the connection piece allows to connect the supply pipe and the drain pipe directly without any additional fittings. The length of the connection piece can be adjusted on the inlet side as well as on the outlet side. The connection piece is preferably made of plastic, whereby the connection piece may consist of two or more parts that are welded or screwed together, but can also be made of one piece of plastic that is made by extrusion or by pressing in a suitable mould. A watertight and airtight connection piece can thus be obtained at a low cost.

It is moreover possible to execute the connection piece in a special colour indicating that it is a temporary and removable part. This colour can be the same as the colour of the temporary watertight lid and the temporary airtight lid on the supply pipe and the drain pipe respectively. When placing the overhanging part, the temporary parts to be removed are then easy to identify.

It is also possible for the connection piece to be at least partially made of a transparent material. This allows to control the flow of water from the flush basin to the drain and the sewer system and to also control blockages in the sewer system and their solution even before the overhanging part of the hanging toilet is installed.

In order to better explain the characteristics of the invention, the following preferred embodiment of a connection piece according to the invention is described as an example only without being limitative in any way, with reference to the accompanying figures, in which:
figure 1 schematically shows a hanging toilet according to the present state of the art, seen in perspective;
figure 2 represents figure 1, but now provided with a connection piece according to the invention;
figure 3 shows the part indicated by F3 in figure 2 to a larger scale;
figure 4 represents figure 2 after the overhanging part of the hanging toilet has been put in place.

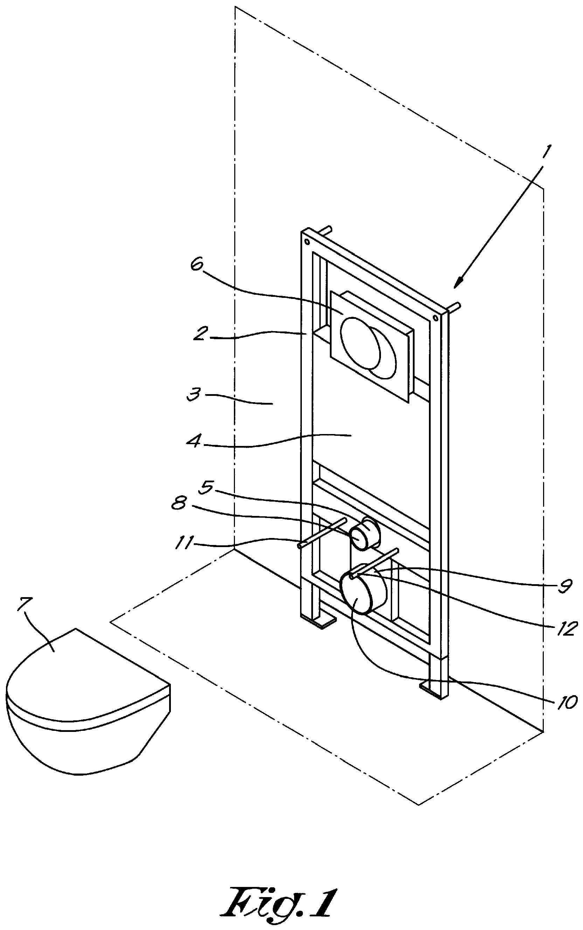

Figure 1 schematically represents a hanging toilet 1 according to the present state of the art, consisting of a supporting framework 2 that is attached to or in an upright wall 3 where the framework 2 is provided with a flush basin 4, which is connected to a water supply pipe 5, and with a push button 6, with which a user can activate the flush basin 4, and of an overhanging part 7 of the hanging toilet 1 which is to be attached to the framework 2. The supply pipe 5 from the flush basin 4 to the overhanging part 7 of the hanging toilet 1 is closed with a watertight lid 8 as long as the overhanging part 7 has not been placed. The drain pipe 9, to which the overhanging part 7 of the hanging toilet must be connected, is closed by means of an airtight lid 10 as long as the overhanging part 7 has not been placed.

The framework 2 is further provided with two threaded rods 11, 12 over which the overhanging part 7 of the hanging toilet 1 must be slid to attach it with wing nuts to the latter.

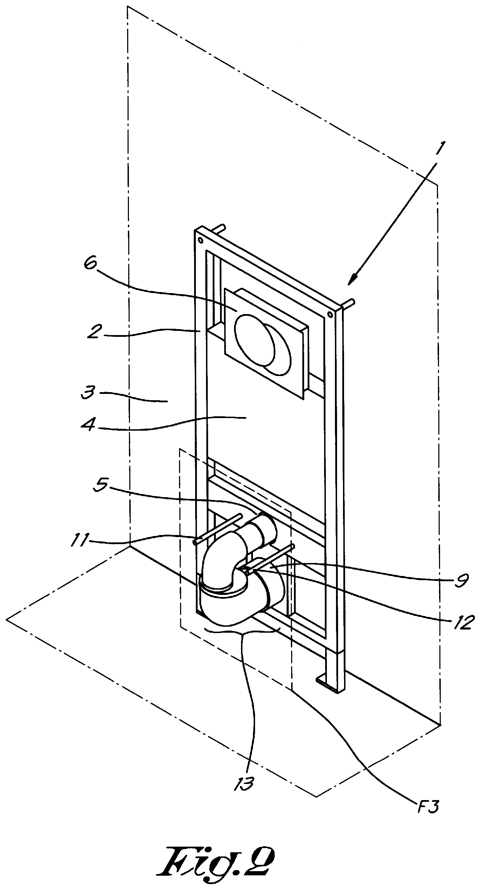

Figure 2 represents figure 1, where in this case a connection piece 13 according to the invention is placed between the flush basin's 4 supply pipe 5 of flush water and the drain pipe 9 to the sewer system.

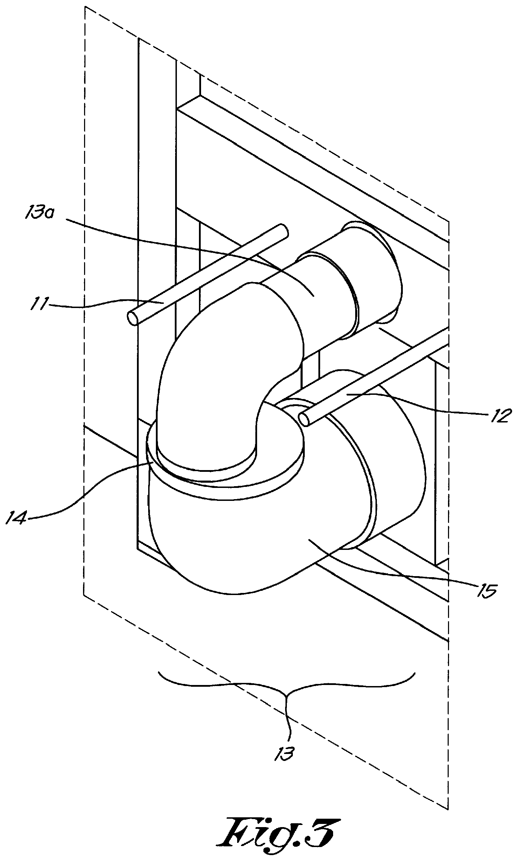

Figure 3 shows the connection piece 13 according to the invention in more detail. In this case, the connection piece 13 is composed of three parts attached to each other (13a, 14, 15). The connection piece 13 can be adjusted in length on both the inlet side (13a) and the outlet side (15) .

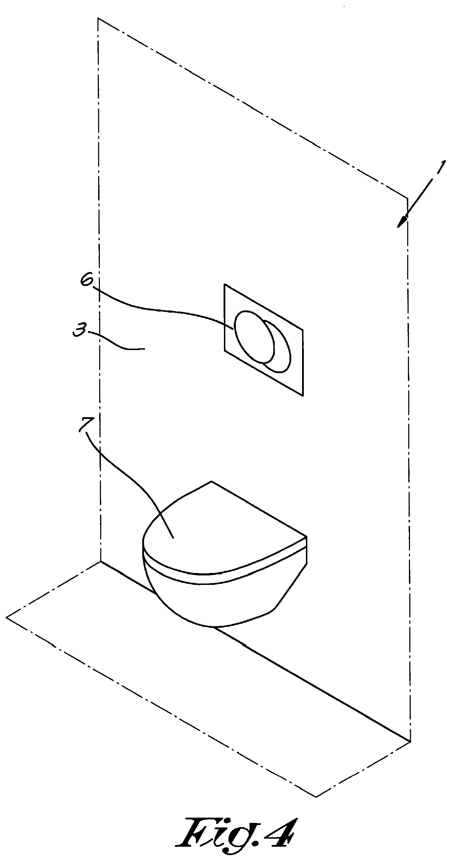

Figure 4 shows a finished hanging toilet, where the temporary coupling according to the invention is now replaced by the final overhanging part 7 of the hanging toilet 7. The watertight lid 8 and the airtight lid 10 have been removed so as to allow the normal operation of the hanging toilet.

The operation of the connection piece 13 according to the invention is very simple and as follows.

When placing a hanging toilet 1, a supporting framework 2 is first attached against or in an upright wall 3, and the water supply pipe 5 from the flush basin 4 to the overhanging part 7 of the hanging toilet 1 is sealed with a watertight lid 8, and the drain pipe 9 to the sewer system is sealed with an airtight lid 10.

After removing the watertight lid 8 and the airtight lid 10, both openings are connected by providing a connection piece 13 according to the invention. Seals are already provided in the flush system to obtain a watertight and airtight connection between the two openings.

The flush basin 4 provided in the framework 2 is now connected to the water mains, and the flush basin 4 fills up with water. When pressing the push button 6, a flush of water is now sent from the flush basin 4 through the connection piece 13 and is drained further through the drain pipe 9 to the sewer system, without any unwanted leaking water on the floor and without any smell from the sewer system.

If the connection piece 13 is provided with a transparent part, the proper functioning of the supply and discharge of water can be visually checked.

When finishing the worksite, the connection piece 13 can be removed again and replaced by the final overhanging part 7 of the hanging toilet 1, with this overhanging part 7 being pushed over two rods 11,12 provided to that end and being fixed by means of two wing nuts.
The temporary connection piece 13 according to the invention can, just as the temporary lids 8 and 10, be recovered and used again for the next installation of a hanging toilet 1.

The present invention is by no means limited to the embodiment described by way of example and represented in the figures; on the contrary, such a connection piece according to the invention can be made in all sorts of shapes and dimensions while still remaining within the scope of the invention, as defined in the following claims.

## Claims

1. Connection piece (13) for a hanging toilet, **characterised in that** the connection piece connects the supply pipe (5) of the flush basin (4) to a hanging toilet (1) with the hanging toilet's drain pipe (9) to the sewer system.

2. Connection piece according to claim 1, **characterised in that** the connection piece (13) has a fitting small diameter on the side that is connected to the supply pipe (5) of the flush basin and a fitting larger diameter on the side that is connected to the drain pipe (9) to the sewer system.

3. Connection piece according to claim 1 or 2, **characterised in that** seals for connecting to the supply pipe (5) and to the drain pipe (9) are already provided in the flush system.

4. Connection piece according to one of the preceding claims, **characterised in that** the connection piece (13) is made of plastic.

5. Connection piece according to claim 4, **characterised in that** the connection piece (13) consists of two or more parts (13a, 14, 15) that are welded together or screwed together.

6. Connection piece according to claim 4, **characterised in that** the connection piece (13) is made of one piece of plastic by extrusion or by pressing it in a suitable mould.

7. Connection piece according to claim 1, **characterised in that** the connection piece (13) is made in a special colour indicating that it is a temporary and removable part.

8. Connection piece according to claim 1, **characterised in that** the connection piece (13) is at least partly made of a transparent material.

9. Connection piece according to claim 5, **characterised in that** the connection piece is adjustable in length on both the inlet side (13a) and the outlet side (15).
